# EUROPÄISCHE PATENTANMELDUNG

(11) **EP 1 177 991 A2**
(43) Veröffentlichungstag der Anmeldung: **06.02.2002**
(21) Anmeldenummer: 01110936.0
(22) Anmeldetag: 05.05.2001
(51) Int. Cl.: B65G 15/22

(54) **Verfahren zum Transport und zur Vorbereitung von hohlen Profilstäben aus Kunststoff für die Bildung von Fensterrahmen**

(30) Priorität: 12.05.2000 DE 10023339
(71) Anmelder: WILLI STÜRTZ MASCHINENBAU GmbH, D-53577 Neustadt (DE)
(72) Erfinder: Stürtz, Karl-Heinz, 53577 Neustadt (DE)
(74) Vertreter: Kossobutzki, Walter, Dipl.-Ing.(FH)

(57) **Zusammenfassung**

Die Erfindung bezieht sich auf eine Vorrichtung zum Transport und zur Vorbereitung von hohlen Profilstäben aus Kunststoff für die Bildung von Fensterrahmen, bestehend aus einer sich an einer Säge anschließenden, die Profilstäbe quer zu ihrer Längsachse schrittweise transportierenden Fördereinrichtung.

Um ohne allzugroßen maschinentechnischen Aufwand während des Einbringens und Ausrichtens der Metallarmierung nicht nur fertig armierte Profilstäbe weitertransportieren, sondern auch zugeschnittene Profilstäbe von der Säge an die Fördereinrichtung (2) übergeben und weitertransportieren zu können, besteht die Fördereinrichtung (2) aus mindestens vier endlosen, getrennt antreibbaren und mit konstantem Abstand voneinander aufweisenden Mitnehmern (9) versehenen Fördermitteln (5 bis 8), von denen - in Transportrichtung gesehen - die ersten beiden Fördermittel (5,6) an ihrem Wirktrum gleich lang ausgebildet sind und mindestens vier Mitnehmer (9) aufweisen und das dritte Fördermittel (7) im Bereich seines Wirktrum mindestens einen Mitnehmer (9) mehr als die beiden ersten Fördermittel besitzt.

## Beschreibung

Die Erfindung bezieht sich auf eine Vorrichtung zum Transport und zur Vorbereitung von hohlen Profilstäben aus Kunststoff für die Bildung von Fensterrahmen, bestehend aus einer sich an einer Säge anschließenden, die Profilstäbe quer zu ihrer Längsachse schrittweise transportierenden Fördereinrichtung.

Bei der Herstellung von Fensterrahmen aus Kunststoff werden zunächst von einer endlichen Profilstange die benötigten Profilstäbe unter Gehrung auf Länge mittels einer Säge zugeschnitten. Anschließend werden die zugeschnittenen Profilstäbe aus der Säge herausgeführt und an eine Fördereinrichtung übergeben, mittels der die Profilstäbe quer zu ihrer Längsachse transportiert und an eine Bearbeitungsstation abgegeben werden. Während dieses Transportes - die Fördereinrichtung wird dabei mehrfach angehalten - wird in jeden Profilstab aus Kunststoff ein dem Innenquerschnitt desselben angepaßtes Metallprofil eingeschoben und ausgerichtet. Anschließend werden die Profilstäbe aus Kunststoff mit den der Armierung dienenden Metallprofilen verschraubt. In der Bearbeitungsstation werden dann Bohrungen, Schlitze und Ausfräsungen an den Profilstäben erzeugt, die später beim Fensterrahmen für unterschiedliche Zwecke benötigt werden. Bei dieser bekannten Fördereinrichtung wird es als nachteilig angesehen, dass dann, wenn die Fördereinrichtung für das Einschieben und/oder Ausrichten der Metallprofile angehalten werden muß auch der Transport der übrigen, auf der Querfördereinrichtung befindlichen Profilstäbe aus Kunststoff unterbrochen wird. Während dieser Unterbrechung ist es nicht möglich, bereits armierte Profilstäbe aus Kunststoff weiter zu transportieren und an die Bearbeitungsstation abzugeben. Dadurch wird die Taktzeit nachteilig beeinflußt.

Um die Taktzeit und damit die Leistung einer Anlage zur Herstellung von Fensterrahmen zu erhöhen, ist aus der DE-OS 198 05 574 ein sogenannter Stauförderer bekannt geworden, bei dem die Profilstäbe aus Kunststoff auf Schlitten aufgelegt werden, die von der Fördereinrichtung ausschließlich durch Reibung mitgenommen werden. Dabei ist es möglich, die Schlitten in vorgegebenen Positionen anzuhalten, ohne dass dadurch der Transport der anderen, mit einem Profilstab belegten Schlitten beeinträchtigt wird. Jeweils am Anfang und am Ende der Fördereinrichtung müssen die Schlitten dann über besondere Hub- und Verschiebeeinheiten auf die Fördereinrichtung übergeben bzw. von derselben abgehoben und, getrennt von der Fördereinrichtung, in ihre jeweilige Ausgangslage zurück transportiert werden. Eine derartige Vorrichtung ist mit einem verhältnismäßig hohen finanziellen Aufwand verbunden.

Der Erfindung liegt nun die Aufgabe zugrunde, eine Vorrichtung zum Transport und zur Vorbereitung von hohlen Profilstäben aus Kunststoff für die Bildung von Fensterrahmen aufzuzeigen, die es ermöglicht, dass während des Einbringens und Ausrichtens der Metallarmierung in die Profilstäbe nicht nur fertig armierte Profilstäbe weitertransportiert, sondern auch bereits zugeschnittene Profilstäbe von der Säge an die Fördereinrichtung übergeben und weiter transportiert werden können und bei der dies mit einem nicht allzu großen maschinentechnischen Aufwand erfolgen kann.

Zur Lösung dieser Aufgabe wird gemäß der Erfindung bei einer Vorrichtung der eingangs beschriebenen Gattung vorgeschlagen, dass die Fördereinrichtung aus mindestens vier endlosen, getrennt antreibbaren und mit konstantem Abstand voneinander aufweisenden Mitnehmern versehenen Fördermitteln gebildet ist, dass - in Transportrichtung gesehen - die ersten beiden Fördermittel an ihrem Wirktrum gleich lang ausgebildet sind und mindestens vier Mitnehmer aufweisen und dass das dritte Fördermittel im Bereich seines Wirktrum mindestens einen Mitnehmer mehr als die beiden ersten Fördermittel besitzt.

Durch eine solche Ausgestaltung der Vorrichtung ist es möglich, während des Einbringens und Ausrichtens der Metallarmierung in die Profilstäbe - die Profilstäbe müssen dazu eine Ruhestellung einnehmen - bereits zugeschnittene Profilstäbe beispielsweise von einem Rollgang der Säge an die Fördereinrichtung zu übergeben und dieselben sowie bereits fertig armierte Profilstäbe weiter zu transportieren. Dadurch kann die Taktzeit und die Leistung der Vorrichtung erhöht werden.

Weitere Merkmale einer Vorrichtung gemäß der Erfindung sind in den Ansprüchen 2 bis 5 offenbart.

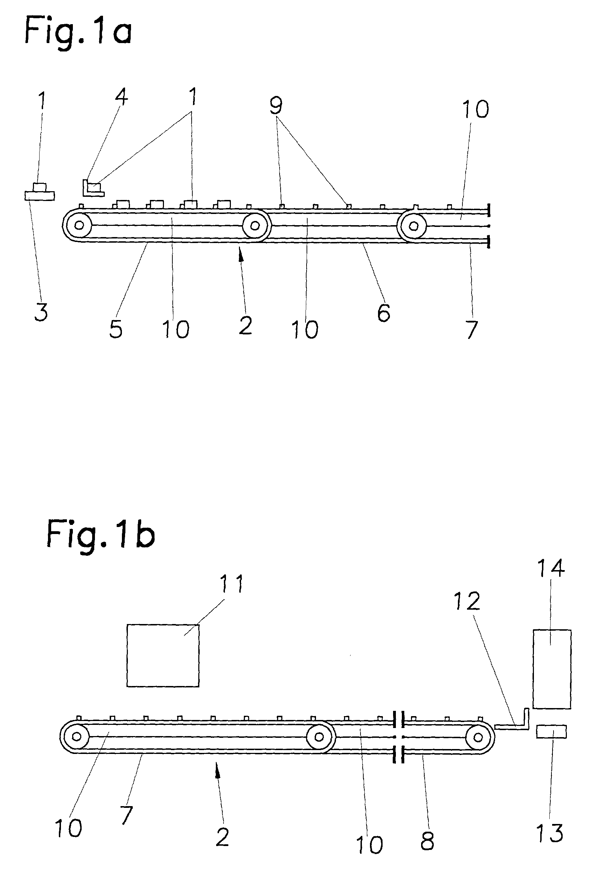

Die Erfindung wird nachfolgend anhand eines in einer Zeichnung in stark vereinfachter Weise dargestellten Ausführungsbeispieles näher erläutert. Dabei zeigen
- Fig. 1a: eine Seitenansicht des ersten Teiles einer Fördereinrichtung gemäß der Erfindung und
- Fig. 1b: die Fortsetzung und damit den zweiten Teil der Fördereinrichtung der Fig. 1.

Die in den Figuren 1a und 1b der Zeichnung dargestellte Vorrichtung dient zum Transport und zur Vorbereitung von hohlen Profilstäben 1 aus Kunststoff für die Bildung von Fensterrahmen. Diese Vorrichtung besteht zunächst aus einer Fördereinrichtung 2, die von einem nicht näher dargestellten, an sich bekannten Gestell getragen wird. Diese Fördereinrichtung 2 schließt sich an einen nur angedeuteten Rollgang 3 an, über den die Profilstäbe 1 von einer an sich bekannten, ebenfalls nicht dargestellten Säge zugeführt werden. Mittels dieser Säge werden die Profilstäbe 1 von einem endlichen Profilstück, welches beispielsweise eine Länge von 6,0 m aufweist, in der erforderlichen Länge durch einen sogenannten Gehrungsschnitt abgetrennt. Mittels einer nur angedeuteten Übergabeeinrichtung 4 wird jeweils ein zugeschnittener Profilstab 1 von dem Rollgang 3 abgenommen und in einer genau vorgegebenen Lage an die Fördereinrichtung 2 übergeben.

Die Fördereinrichtung 2, die die Profilstäbe 1 quer zu ihrer Längsrichtung transportiert, besteht aus zwei senkrecht zur Zeichnungsebene mit einem vorgegebenen Abstand voneinander angeordneten Fördereinheiten, die vollkommen gleich ausgebildet sind, die gemeinsame Antriebsachsen besitzen und die somit vollkommen synchron zueinander verlaufen. Wenn im nachfolgenden von der Fördereinrichtung 2 die Rede ist, sind darunter immer die beiden Fördereinheiten derselben zu verstehen. Die Fördereinrichtung 2 besteht gemäß der Erfindung in diesem Ausführungsbeispiel aus vier endlosen, getrennt antreibbaren Fördermitteln 5 bis 8, die, abgesehen von ihrer Länge, in vorteilhafter Weise vollkommen gleich ausgebildet sind. Jedes Fördermittel 5 bis 8 ist entweder als Gliederförderband ausgebildet, welches an seiner Außenseite Mitnehmer 9 besitzt. Dabei ist es auch möglich, die Fördermittel 5 bis 8 aus einem endlosen Gurt zu bilden, wobei die Mitnehmer 9 als sogenannte Noppen geformt sind. In vorteilhafter Weise weisen die Mitnehmer 9 aller Fördermittel 5 bis 8 einen vorgegebenen Abstand voneinander auf. Alle Fördermittel 5 bis 8 werden durch getrennte Antriebe über die vorerwähnten Antriebsachsen bewegt, wobei der Antrieb normalerweise schrittweise erfolgt. Ferner können die Antriebe mindestens zweier benachbarter bzw. hintereinander angeordneter Fördermittel 5 bis 8 über einen vorgegebenen Zeitraum synchron angetrieben werden.

Das obere bzw. Wirktrum aller Fördermittel 5 bis 8 stützt sich auf jeweils einer Gleitschiene 10 ab, so dass ein mit Profilstäben 1 beladenes Fördermittel 5 bis 8 sich in einer horizontalen Ebene bewegt und nicht durchhängt.

Die beiden ersten Fördermittel 5, 6 sind in ihrer Länge, darunter ist die Länge des oberen Wirktrums zu verstehen, vollkommen gleich ausgebildet. Beide Fördermittel 5, 6 weisen in ihrem Wirktrum im dargestellten Ausführungsbeispiel sechs Mitnehmer 9 auf. Die Anzahl der Mitnehmer 9 im Wirktrum der Fördermittel 5, 6 beträgt mindestens vier und dürfte in der Praxis die Zahl acht nicht überschreiten. Das dritte Fördermittel 7 weist in seinem oberen bzw. Wirktrum mindestens einen, vorteilhaft jedoch zwei Mitnehmer 9 mehr auf als die beiden ersten Fördermittel 5, 6. Die Anzahl der Mitnehmer 9 auf dem oberen bzw. Wirktrum des Fördermittels 8 kann weitgehend beliebig sein. Es ist jedoch vorteilhaft, wenn das Fördermittel 8 in seinem Wirktrum mindestens vier, vorteilhaft jedoch sechs Mitnehmer besitzt.

Das erste Fördermittel 5 ist als sogenannter Zwischenförderer zu bezeichnen und dient dem Transport der Profilstäbe 1 von der nicht dargestellten Säge bzw. der Übergabeeinrichtung 4 zu dem zweiten Fördermittel 6. Im Bereich des zweiten Fördermittels 6 wird in die auf dem Fördermittel 6 befindlichen Profilstäbe 1 die aus einem metallischen Profilstab bestehende Armierung eingebracht. Das Einbringen dieser Armierung kann entweder manuell, also von Hand, oder maschinell erfolgen. Beim Einbringen der Armierung von Hand werden die Profilstäbe 1 aus Kunststoff meist an einem Ende geringfügig angehoben und festgehalten. Beim maschinellen Einbringen der Armierung müssen die Profilstäbe 1 in der entsprechenden Stellung auf dem Fördermittel 6 und damit gegen die Gleitschiene 10 festgespannt werden.

Über dem Fördermittel 7 befindet sich ein sogenannter Schraubwagen 11, der mit mindestens einer Schraubeinheit versehen ist und der senkrecht zur Zeichnungsebene, also in Längsrichtung der Profilstäbe 1, verfahren werden kann. Durch die Schraubeinheit 11 werden Schrauben selbstschneidend durch die Profilstäbe aus Kunststoff in die Metallarmierung eingedreht. Dadurch wird die Metallarmierung fest mit den Profilstäben 1 verbunden. Vor diesem Schraubvorgang werden die Profilstäbe 1 vorzugsweise angehoben und in der angehobenen Lage festgespannt. Nach dem Schraubvorgang wird die Festspannung gelöst und die Profilstäbe 1 werden wieder auf das Fördermittel 7 abgesenkt.

Von dem Fördermittel 7, in dessen Bereich die Metallarmierung in den Profilstäben 1 gesichert wurde, gelangen die Profilstäbe 1 dann auf das Fördermittel 8, welches ebenfalls als sogenannter Zwischenförderer dient. Von dem Fördermittel 8 werden die Profilstäbe 1 dann mittels einer Entnahmeeinrichtung 12 abgenommen und dann an einen Rollgang oder dergleichen übergeben. Dieser transportiert dann die armierten Profilstäbe 1 zu einer weiteren Bearbeitungsstation 14.

## Patentansprüche

1. Vorrichtung zum Transport und zur Vorbereitung von hohlen Profilstäben aus Kunststoff für die Bildung von Fensterrahmen, bestehend aus einer sich an einer Säge anschließenden, die Profilstäbe quer zu ihrer Längsachse schrittweise transportierenden Fördereinrichtung,
**dadurch gekennzeichnet,**
**dass** die Fördereinrichtung (2) aus mindestens vier endlosen, getrennt antreibbaren und mit konstanten Abstand voneinander aufweisenden Mitnehmern (9) versehenen Fördermitteln (5 bis 8) gebildet ist, dass - in Transportrichtung gesehen - die ersten beiden Fördermittel (5,6) an ihrem Wirktrum gleich lang ausgebildet sind und mindestens vier Mitnehmer (9) aufweisen und dass das dritte Fördermittel (7) im Bereich seines Wirktrum mindestens einen Mitnehmer (9) mehr als die beiden ersten Fördermittel besitzt.

2. Vorrichtung nach Anspruch 1,
**dadurch gekennzeichnet,**
**dass** die beiden ersten Fördermittel (5,6) im Bereich ihres Wirktrums bis zu acht Mitnehmer (9) aufweisen.

3. Vorrichtung nach Anspruch 1 oder 2,
**dadurch gekennzeichnet,**
**dass** die Fördermittel (5 bis 8) mit einem schrittweise wirken den Antrieb versehen sind.

4. Vorrichtung nach mindestens einem der Ansprüche 1 bis 3,
**dadurch gekennzeichnet,**
**dass** die Fördermittel (5 bis 8) jeweils aus einem Band mit als Noppen ausgebildeten Mitnehmern (9) gebildet sind.

5. Vorrichtung nach mindestens einem der Ansprüche 1 bis 3,
**dadurch gekennzeichnet,**
**dass** die Fördermittel (5 bis 8) jeweils aus einem Gliederförderband mit Mitnehmern (9) gebildet sind.
